# EUROPÄISCHE PATENTSCHRIFT

(11) **EP 0 601 575 B1**
(45) Veröffentlichungstag und Bekanntmachung des Hinweises auf die Patenterteilung: **17.02.1999**
(21) Anmeldenummer: 93119825.3
(22) Anmeldetag: 09.12.1993
(51) Int. Cl.: H04M 15/30

(54) **Verfahren zur Anzeige von Verbindungsgebühren bei einer Teilnehmereinrichtung**
Method for indicating the connection costs in a subscriber equipment
Procédé pour l'affichage du coût d'une connexion dans un equipement d'abonné

(30) Priorität: 11.12.1992 DE 4241762
(43) Veröffentlichungstag der Anmeldung: 15.06.1994
(73) Patentinhaber: GRUNDIG Aktiengesellschaft, 90762 Fürth (DE)
(72) Erfinder: Terkowski, Jürgen, GRUNDIG E.M.V., D-90748 Fürth (DE)

(56) Entgegenhaltungen:
- EP-A- 0 113 693
- WO-A-92/11725
- US-A- 4 585 904
- US-A- 4 888 822
- PATENT ABSTRACTS OF JAPAN vol. 12, no. 397 (E-672)21. Oktober 1988 & JP-A-63 139 462 (CANON INC.) 11. Juni 1988

## Beschreibung

Die Erfindung betrifft ein Verfahren zur Anzeige von Verbindungsgebühren bei einer Teilnehmereinrichtung gemäß dem Oberbegriff des Patentanspruchs 1.

Aus der DE-A1-35 19 329 ist ein Verfahren zur Gebührenzuordnung für mehrere Benutzer einer Teilnehmereinrichtung bekannt. Bei diesem Verfahren ist jedem Benutzer ein eigener Gebührenspeicher zugeordnet. Mit Hilfe eines Benutzerkennzeichens wird der dem Benutzer zugeordnete Gebührenspeicher ausgewählt und beim Empfang eines Gebührenimpulses ein in einem Umrechnungsspeicher abgelegter Betrag von einem Benutzer-Guthaben subtrahiert.

Dieses Verfahren weist den Nachteil auf, daß ein Gebührenimpuls zur Berechnung der Verbindungsgebühren benötigt wird, dessen Übertragung über das Nachrichtennetz und Auswertung in der Teilnehmereinrichtung meist kostenpflichtig ist.

Beim Gegenstand der DE-A1-26 32 106 ist ein Fernsprechapparat mit integriertem elektronischen Rechenwerk bekannt. Das integrierte Rechenwerk berechnet dabei die Verbindungsgebühren, indem eine vom Benutzer eingegebene Gebühr für eine Gebühreneinheit mit dem Takt des Gebührenimpulses, der über das Nachrichtennetz übertragen wird, aufaddiert wird.

Diese Teilnehmereinrichtung weist den Nachteil auf, daß bei jeder neuen Gesprächsverbindung die Gebühr für eine Gebühreneinheit erneut eingegeben werden muß. Weiterhin ist auch hier nachteilig, daß zur Berechnung der Gesprächsgebühren der Gebührenimpuls benötigt wird, dessen Übertragung zum Teilnehmer kostenpflichtig ist.

Beim Gegenstand der DE-A1-34 04 830 ist ein Fernsprechapparat mit einer Gebührenerfassung bekannt. Dieser weist Speichermittel auf, die in Gruppen von Speicherplätzen aufgeteilt sind. In einer ersten Gruppe von Speicherplätzen wird der Zählerstand eines Zählers für Gebührenimpulse, in einer zweiten Gruppe von Speicherplätzen eine Teilnehmerrufnummer und in einer weiteren Gruppe von Speicherplätzen alphanumerische Daten abgespeichert. Die abgespeicherten Daten können auf einer Anzeige benutzergesteuert angezeigt werden.

Auch diese Teilnehmereinrichtung weist den Nachteil auf, daß Gebührenimpulse aufsummiert werden, deren Übertragung kostenpflichtig ist.

Aus der DE-C2-29 33 477 ist eine Vorrichtung zur Speicherung von Daten in einem Fernsprechapparat bekannt. Bei dieser Vorrichtung sind die Speicherplätze,
Übertragungsmittel und eine Anzeigevorrichtung derart ausgebildet, daß neben der Teilnehmerrufnummer auch eine Zeitinformation sowie Zusatzdaten in Form eines geschlossenen Datensatzes verarbeitet werden können. Dadurch ist es möglich die Gesprächsdauer abzuspeichern, zu übertragen und anzuzeigen.

Diese Vorrichtung weist den Nachteil auf, daß lediglich die Gesprächsdauer, nicht aber die Gesprächsgebühren ermittelt und angezeigt werden können.

Aus WO-A-9211725 ist ein Telekommunikationsgerät bekannt, welches die Erfassung von Gebühren ermöglicht. Die Gebührenberechnung erfolgt in Abhängigkeit der Verbindungsdauer, der Rufnummer und der gespeicherten Gebührendaten.
Nachteilig hierbei ist aber, daß eine Berücksichtigung der Kommunikationsart weder berücksichtigt noch automatisch erkannt wird.

Aus US-A-4 888 822 ist bekannt, die Gebühren für eine Telefonverbindung in Abhängigkeit von der Rufnumer und den zugehörigen Gebührenparametern anzuzeigen. Die Gebührenberechnung erfolgt abhängig von der Rufnummer, des aktuellen Datums, der aktuellen Uhrzeit und der Gesprächsdauer. Ein Parameter bzgl. der Kommunikationsart wird aber auch hier nicht berücksichtigt.

Der Erfindung liegt die Aufgabe zugrunde, ein Verfahren anzugeben, das eine Berechnung und Anzeige von Verbindungsgebühren ermöglicht, auch wenn der Gebührenimpuls nicht über das Nachrichtennetz übertragen wird.

Diese Aufgabe wird erfindungsgemäß durch die kennzeichnenden Merkmale des Patentanspruchs 1 gelöst.

Das erfindungsgemäße Verfahren weist den Vorteil auf, daß zur Berechnung der Verbindungsgebühren kein Gebührenimpuls benötigt wird. Weiterhin vorteilhaft ist, daß Gebührenänderungen in Abhängigkeit von Uhrzeit und Wochentag automatisch erkannt und berücksichtigt werden. Außerdem ist es möglich, die Berechnung der Verbindungsgebühren in Abhängigkeit von der Kommunikationsart bzw. des benutzten Nachrichtennetzes (Fernsprechnetz, Datennetz) durchzuführen. Ein weiterer Vorteil liegt in der Möglichkeit die Verbindungsgebühren in Abhängigkeit von Teilen einer Teilnehmerrufnummer, wie z.B. der Ortsnetzkennzahl zu berechnen, da dadurch der Speicheraufwand verringert werden kann.

Das Verfahren nach Anspruch 2 weist den Vorteil auf, daß für alle abgespeicherten Teilnehmerrufnummern und Teilen von Teilnehmerrufnummern Beginn und Ende von unterschiedlich tarifierten Zeiträumen gemeinsam abgespeichert werden, wodurch sowohl der Speicherbedarf verringert als auch die Bedienung der Teilnehmereinrichtung vereinfacht wird.

Das Verfahren nach Anspruch 3 weist den Vorteil auf, daß bei der gewählten Festlegung des Gebührencodes die Berechnung der Verbindungsgebühren sehr einfach durchführbar ist.

Das Verfahren nach Anspruch 4 weist den Vorteil auf, daß die Gebührencodes sowohl vom Benutzer über die Tastatur oder mittels eines Datenträgers als auch von einer zentralen Stelle, die zur Änderung berechtigt ist, geändert werden können.

Das Verfahren nach Anspruch 5 weist den Vorteil auf, daß eine Überprüfung eines Gebührencodes, der einer bestimmten Teilnehmerrufnummer zugeordnet ist, ermöglicht wird, ohne Wählsignale an das Nachrichtennetz abzugeben.

Das Verfahren nach Anspruch 6 weist den Vorteil auf, daß ein einfacher Vergleich der durch die Teilnehmereinrichtung berechneten Verbindungsgebühren mit den durch den Nachrichtennetzbetreiber und/oder Dienstanbieter in Rechnung gestellten Verbindungsgebühren für den Benutzer ermöglicht wird.

Die Erfindung wird im folgenden näher beschrieben und erläutert. Es zeigt:
- Fig. 1: ein Blockschaltbild der für das Verfahren benötigten Funktionsblöcke einer Teilnehmereinrichtung,
- Fig. 2: ein mögliches Format für einen Datensatz, wie er im Speicher der Teilnehmereinrichtung abgespeichert ist,
- Fig. 3: einen Ablaufplan des Verfahrens zur Berechnung der Verbindungsgebühren.

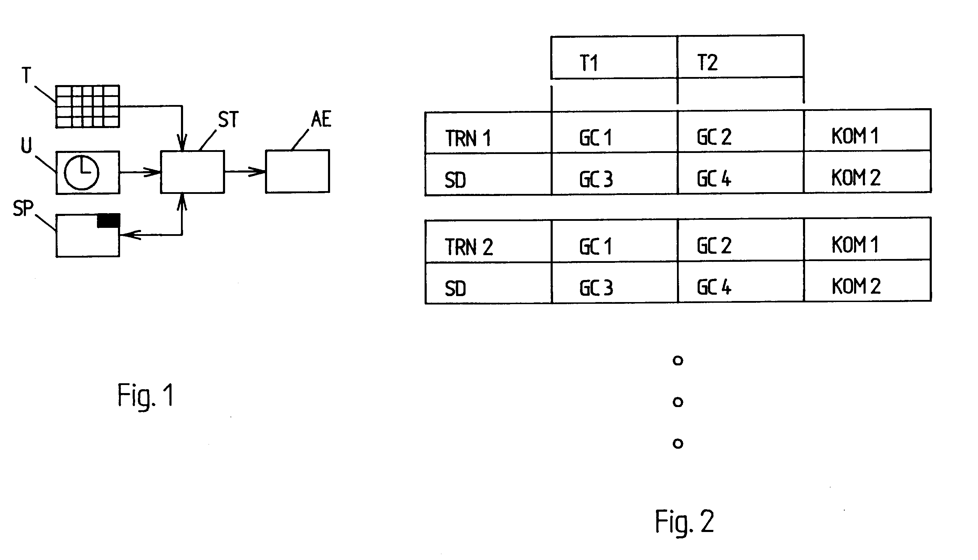

Im folgenden wird von einer Teilnehmereinrichtung in Form eines Fernsprechapparates ausgegangen. Fig. 1 zeigt die durch das Verfahren mitbenutzen Funktionsblöcke des Fernsprechapparates. Die Steuereinheit ST ist mit einer Tastatur T zur Eingabe der Rufnummern und weiterer alphanumerischer Daten, mit einer Uhr U, welche Zeitinformationen und Informationen über den Wochentag bereitstellt, mit einem Speicher SP zur Speicherung der über die Tastatur T oder die Verbindung zum Nachrichtennetz eingegebenen Daten und der Anzeigeeinheit AE verbunden. All diese Funktionsblöcke sind in modernen Teilnehmereinrichtungen ohnehin vorhanden und können mitbenutzt werden.

In Fig. 2 ist ein Ausschnitt aus dem Inhalt des Speichers SP dargestellt. Die abgespeicherten Daten sind in Datenblöcke unterteilt, die bei einem abgehenden Ruf durch die Teilnehmerrufnummer TRN ausgewählt und teils angezeigt, teils von der Steuereinheit ST verwendet werden. Einer ersten Teilnehmerrufnummer TRN1 ist in einer ersten Kommunikationsart KOM 1 und in einem ersten Zeitintervall T1 ein erster Gebührencode GC1 zugeordnet.

Hierbei kann auch nur ein Teil einer Rufnummer als Teilnehmerrufnummer TRN abgespeichert sein, wie beispielsweise die Ortsnetzkennzahl 089 für München. Dann wird bei der Eingabe einer Rufnummer gegebenenfalls erkannt, daß ein erster Teil der eingegebenen Rufnummer mit der abgespeicherten Teilnehmerrufnummer TRN 1 übereinstimmt und es wird der Gebührencode GC1 zur Berechnung der Verbindungsgebühren VG verwendet. Wird in einem Zeitintervall T2 eine Verbindung mit der Teilnehmerrufnummer TRN2 hergestellt, wird in der Kommunikationsart KOM 1 der der Teilnehmerrufnummer TRN 2 zugeordnete Gebührencode GC 2 zur Berechnung der Verbindungsgebühren verwendet.

Die unterschiedlichen Kommunikationsarten KOM 1 und KOM 2 unterscheiden sich zumindest in den zu entrichtenden Gebührensätzen. Dadurch können auch Gebühren für Mehrwertdienst, die an den Netzbetreiber zusammen mit den Verbindungsgebühren VG zu zahlen sind, sowie Verbindungsgebühren für Datennetze, wie Datex-P, korrekt erfaßt Werden. Wird für die Steuereinheit ST eine entsprechende Kennung der Kommunikationsart KOM über das Nachrichtennetz übertragen, kann die Auswahl des Gebührencodes GC automatisch erfolgen.

Die Zeitintervalle T1 und T2 können sowohl durch eine Uhrzeit als auch durch einen Wochentag festgelegt sein. Sind in einem Nachrichtennetz mehr als zwei Tarife vorgesehen, die aufgrund des Verbindungszeitpunktes ausgewählt werden, ist eine einfache Erweiterung durch Anfügen eines dritten Zeitintervalls T3 denkbar. Gleiches gilt für eine weitere Kommunikationsart KOM 3. Auch hier können durch
Umprogrammierung des Speichers SP und Änderung des Steuerprogramms weitere Gebührencodes GC verwendet werden. Im Feld SD werden sonstige Daten wie Name, Adresse usw. des zur Teilnmehmerrufnummer gehörigen Teilnehmers gespeichert.

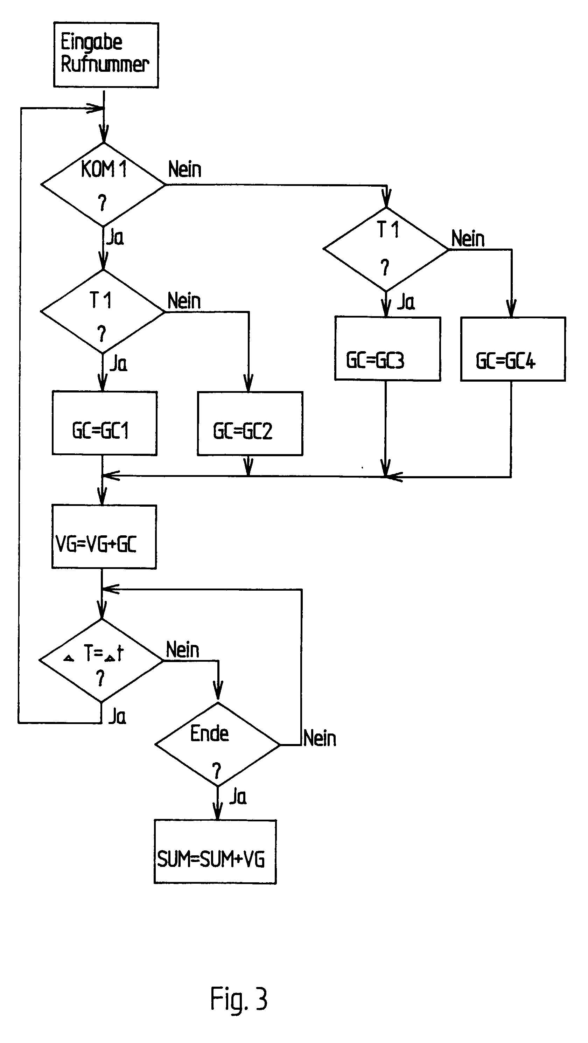

Fig. 3 zeigt das Verfahren in Form eines Ablaufplans. Zunächst erfolgt die Eingabe der Rufnummer und der Verbindungsaufbau über das Nachrichtennetz. Die Eingabe der Rufnummer kann durch Kurzwahl, Zielwahl sowie Ziffernweise mit Hilfe einer Wählscheibe oder von Nummerntasten erfolgen.

Anschließend wird die Kommunikationsart KOM festgestellt. Sofern für eine Teilnehmerrufnummer TRN mehrere Kommunikationsarten KOM 1, KOM 2 möglich sind, wird aufgrund von über das Nachrichtennetz empfangenen Signalen oder von Benutzereingaben die Kommunikationsart KOM festgelegt.

Danach wird von der Uhr U die aktuelle Zeitinformation des Verbindungsbaubaus abgerufen und mit den ein Speicher SP abgelegten Zeitintervallen T 1 und T 2 verglichen. Liegt der von der Uhr U ausgegebene Zeitpunkt im Zeitintervall T 1 und wurde die Kommunikationsart KOM 1 festgestellt, wird der Gebührencode GC 1 zur Berechnung der Verbindungsgebühren VG verwendet. Liegt der Zeitpunkt des Verbindungsaufbaus im Zeitintervall T2 und wurde Kommunikationsart KOM 1 festgestellt, wird der Gebührencode GC 2 zur Berechnung der Verbindungsgebühren VG verwendet. Bei Kommunikationsart KOM 2 wird im Zeitintervall T 1 der Gebührencode GC 3, im Zeitintervall T 2 der Gebührencode GC 4 zur Berechnung der Verbindungsgebühren VG verwendet. Die Gebührencodes GC 1, GC 2, GC 3 und GC 4 können für jede Teilnehmerrufnummer TRN unterschiedliche Werte aufweisen.

Im nächsten Schritt wird die Verbindungsgebühr VG berechnet. Hierfür wird zur bisher berechneten Verbindungsgebühr VG der ausgewählte Gebührencode GC addiert, um die aktualisierte Verbindungsgebühr VG zu erhalten. Es wird dabei davon ausgegangen, daß der Gebührencode GC die Gebühren für eine bestimmte konstante Verbindungsdauer T angibt. Die neu berechnete Verbindungsgebühr VG wird in der Anzeigeeinheit AE angezeigt.

Danach folgt eine Warteschleife, bis die einem Gebührencode GC zugeordnete Verbindungsdauer T abgelaufen ist und der nächste Gebührencode GC zu den Verbindungsgebühren VG addiert wird. In dieser Warteschleife wird festgestellt, ob das Gespräch beendet wurde. Ist dies der Fall, wird die Verbindungsgebühr VG zu den bisher insgesamt angefallenen Verbindungsgebühren SUM addiert. Die Summe der Verbindungsgebühren SUM kann benutzergesteuert angezeigt oder gelöscht werden.

Wird durch den Gebührencode GC eine Verbindungsdauer T für eine bestimmte konstante Gebühreneinheit angegeben, so bleibt der Gebührencode GC immer konstant und in Abhängigkeit von Teilnehmerrufnummer TRN, Kommunikationsart KOM und Zeitintervall T 1 oder T 2 wird der Verbindungsdauer T ein unterschiedlicher Wert zugewiesen.

## Patentansprüche

1. Verfahren zur Anzeige von Verbindungsgebühren bei einer Teilnehmereinrichtung eines Nachrichtennetzes, welche einen Speicher (SP) zur Speicherung von mit einer Tastatur (T) eingegebenen Daten, insbesondere Teilnehmerrufnummer, Namen der Teilnehmer, Teilnehmeradresse, sowie Gebührencodes (GC) und Zeiträume, in denen ein bestimmter Gebührencode (GC) zur Berechnung der Verbindungsgebühren verwendet wird, weiterhin eine Uhr (U) zur Bereitstellung von Informationen über Uhrzeit, Wochentag und Datum aufweist, mit einer Anzeigeeinrichtung (AE) zur Anzeige der aus Gebührencode (GC) und Verbindungsdauer berechneten Verbindungsgebühren (VG) und mit einer mit der Tastatur (T), dem Speicher (SP), der Uhr (U) und der Anzeigeeinrichtung (AE) verbundenen Steuereinrichtung (ST), welche die Funktionen der Teilnehmereinrichtung, insbesondere Kurzwahl, Zielwahl, Notizbuchfunktion usw. steuert,
**dadurch gekennzeichnet, daß**
die Steuereinrichtung (ST) zur Berechnung der Verbindungsgebühren (VG) bei einem abgehenden Ruf den Gebührencode (GC) aufgrund der Kommunikationsart (KOM) auswählt, wobei die Steuereinrichtung die Kommunikationsart (KOM) anhand der über das Nachrichtennetz übertragenen Kennung erkennt,
die Steuereinrichtung (ST) zur Berechnung der Verbindungsgebühren (VG) bei einem abgehenden Ruf den aufgrund des Zeitpunkts der Verbindung und der Kommunikationsart (KOM), insbesondere Datenübertragung in einem Datennetz und Sprachkommunikation, ausgewählten Gebührencode (GC) und die Verbindungsdauer auswertet und
die aus dem Produkt oder Quotienten von Gebührencode (GC) und Verbindungsdauer berechneten Verbindungsgebühren (VG ) auf der Anzeigeeinheit (AE) angezeigt werden.

2. Verfahren nach Anspruch 1,
**dadurch gekennzeichnet, daß**
in einem ersten für alle Teilnehmerrufnummern (TRN) identischen Zeitraum (T1) ein erster Gebührencode (GC) und in einem zweiten für alle Teilnehmerrufnummern identischen Zeitraum (T2) ein zweiter Gebührencode (GC) durch die Steuereinrichtung (ST) ausgewählt wird, wodurch der Benutzer nur zwei Zeiträume über die Tastatur (T) in den Speicher (SP) eingeben muß.

3. Verfahren nach den Ansprüchen 1 bis 2,
**dadurch gekennzeichnet, daß**
der Gebührencode (GC) aus dem Quotienten von Kosten pro Zeiteinheit oder dem Kehrwert dieses Quotienten besteht.

4. Verfahren nach den Ansprüchen 1 bis 3,
**dadurch gekennzeichnet, daß**
die Gebührencodes (GC) durch den Benutzer über die Tastatur (T) oder nach Eingabe einer Geheimzahl von einer Fernwirkzentrale aus oder mittels eines austauschbaren Datenträgers eingegeben und geändert werden können.

5. Verfahren nach den Ansprüchen 1 bis 4,
**dadurch gekennzeichnet, daß**
die Gebührencodes (GC) auf der Anzeigeeinrichtung (AE) benutzergesteuert angezeigt werden ohne eine Teilnehmerrufnummer (TRN) an das Nachrichtennetz auszugeben.

6. Verfahren nach den Anspruchen 1 bis 5,
**dadurch gekennzeichnet, daß**
sämtliche Verbindungsgebühren (VG) durch die Steuereinheit (ST) aufsummiert und in einem Summenspeicher (SUM) abgespeichert werden und der Summenspeicher (SUM) benutzergesteuert löschbar ist.

## Claims

1. Method of indicating connection costs in a subscriber equipment of a communications network, which has a memory (SP) for storing data entered using a keyboard (T), in particular subscriber number, name of subscriber, subscriber address and also charge codes (GC) and time periods in which a particular charge code (GC) is used to calculate the connection costs, and which furthermore has a clock (U) for providing information about time of day, day of the week and date, comprising a display device (AE) for displaying the connection costs (VG) calculated from the charge code (GC) and call duration and comprising a control device (ST) which is connected to the keyboard (T), the memory (SP), the clock (U) and the display device (AE) and which controls the functions of the subscriber equipment, in particular short code dialling, speed dialling, notebook function etc., characterized in that
to calculate the connection costs (VG) in the case of an outgoing call, the control device (ST) selects the charge code (GC) on the basis of the type of communication (KOM), the control device detecting the type of communication (KOM) on the basis of the identifier transmitted via the communications network,
to calculate the connection costs (VG) in the case of an outgoing call, the control device (ST) evaluates the charge code (GC) selected on the basis of the time instant of the call and of the type of communication (KOM), in particular data transmission in a data network and speech communication, and the call duration, and
the connection costs (VG) calculated from the product or quotient of charge code (GC) and call duration are displayed on the display unit (AE).

2. Method according to Claim 1, characterized in that the control device (ST) selects a first charge code (GC) in a first time interval (T1) which is identical for all the subscriber call numbers (TRN) and a second charge code (GC) in a second time interval (T2) which is identical for all the subscriber call numbers, as a result of which the user has to enter only two time intervals in the memory (SP) by means of the keyboard (T).

3. Method according to Claims 1 to 2, characterized in that the charge code (GC) comprises the quotient of costs per unit time or the inverse of said quotient.

4. Method according to Claims 1 to 3, characterized in that the charge codes (GC) can be entered and changed by the user via the keyboard (T) or after entering a secret number of a telecontrol exchange from or by means of an exchangeable data medium.

5. Method according to Claims 1 to 4, characterized in that the charge codes (GC) are displayed on the display device (AE) under user control without emitting a subscriber call number (TRN) to the communications network.

6. Method according to Claims 1 to 5, characterized in that all the connection costs (VG) are added by the control unit (ST) and are stored in a sum store (SUM) and the sum store (SUM) can be erased under user control.

## Revendications

1. Procédé pour l'affichage de taxes de communication dans un dispositif d'abonné d'un réseau de transmission d'informations, qui comporte une mémoire (SP) servant à mémoriser des données introduites au moyen d'un clavier (T), notamment des numéros d'abonnés, des noms d'abonnés, des adresses d'abonnés ainsi que des codes de taxation (GC) et des intervalles de temps, pendant lesquels un code de taxation déterminé (GC) est utilisé pour le calcul des taxes de communication, et en outre une horloge (U) pour préparer des informations concernant l'heure, le jour de la semaine et la date, et comportant un dispositif d'affichage (AE) pour l'affichage des taxes de communications (VC) calculées à partir du code de taxation (GC) et de la durée de la communication, et un dispositif de commande (SP), qui est relié au clavier (T), à la mémoire (SP), à l'horloge (U) et au dispositif d'affichage (AE), et qui commande les fonctions du dispositif d'abonné, notamment de la numérotation abrégée, du choix de la destination, de la fonction bloc-notes, etc.,
caractérisé en ce que
le dispositif de commande (ST) servant à calculer les taxes de communication (VG) sélectionne, lors d'un appel partant, le code de taxation (GC) sur la base du type de communication (KOM), le dispositif de commande identifiant le type de communication (KOM) sur la base de l'indicatif transmis par le réseau de transmission d'informations,
le dispositif de commande (ST) servant à calculer les taxes de communication (VG) évalue, lors d'un appel partant, le code de taxation (GC), qui est choisi sur la base de l'instant de la communication et du type de communication (KOM), notamment une transmission de données dans un réseau de transmission de données et une communication de signaux vocaux, et évalue la durée de la communication, et
les taxes de communication (VG) calculées à partir du produit ou du quotient du code de taxation (GC) et de la durée de la communication, sont affichées sur l'unité d'affichage (AE).

2. Procédé selon la revendication 1, caractérisé en ce que
pendant un premier intervalle de temps (T1) identique pour tous les numéros d'appel d'abonnés (TRN), un premier code de taxation (GC) et, pendant un second intervalle de temps (T2) identique pour tous les numéros d'appel d'abonnés, un deuxième code de taxation (GC) sont sélectionnés par le dispositif de commande (ST), ce qui a pour effet que l'utilisateur doit introduire dans la mémoire (SP) uniquement deux intervalles de temps, à l'aide du clavier (T).

3. Procédé selon les revendications 1 et 2, caractérisé en ce que
le code de taxation (GC) est formé par le quotient de coûts par unité de temps ou par l'inverse de ce quotient.

4. Procédé selon les revendications 1 à 3, caractérisé en ce que
les codes de taxation (GC) peuvent être introduits par l'utilisateur au moyen du clavier (T) ou après l'introduction d'un nombre secret à partir d'un central de télécommande ou au moyen d'un support de données interchangeable et être modifiés.

5. Procédé selon les revendications 1 à 4, caractérisé en ce que
les codes de taxation (GC) sont affichés dans le dispositif d'affichage (AE) d'une manière commandée par l'utilisateur sans la délivrance d'un numéro d'abonné (TRN) au réseau de transmission d'informations.

6. Procédé selon les revendications 1 à 5, caractérisé en ce que
toutes les taxes de communication (VG) sont additionnées par l'unité de commande (ST) et sont mémorisées dans une mémoire de somme (SUM) et que la mémoire de somme (SUM) est effaçable d'une manière commandée par l'utilisateur.
